(19) Europäisches Patentamt
European Patent Office
Office européen des brevets

(11) **EP 3 420 247 B1**

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(51) Int Cl.:
*F16G 1/28* (2006.01)          *B62D 5/04* (2006.01)
*F16H 7/16* (2006.01)

(21) Anmeldenummer: **16822443.4**

(22) Anmeldetag: **19.12.2016**

(86) Internationale Anmeldenummer:
**PCT/EP2016/081637**

(87) Internationale Veröffentlichungsnummer:
**WO 2017/144140 (31.08.2017 Gazette 2017/35)**

(54) **ZAHNRIEMENTRIEB**

TOOTHED BELT DRIVE

TRANSMISSION À COURROIE DENTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2016 DE 102016001972**

(43) Veröffentlichungstag der Anmeldung:
**02.01.2019 Patentblatt 2019/01**

(73) Patentinhaber: **ContiTech Antriebssysteme GmbH**
**30165 Hannover (DE)**

(72) Erfinder: **SATTLER, Heiko**
**30900 Wedemark (DE)**

(74) Vertreter: **Kilsch, Armin Ralph**
**Continental Aktiengesellschaft**
**Patente und Lizenzen**
**Postfach 169**
**30001 Hannover (DE)**

(56) Entgegenhaltungen:
**EP-A1- 0 106 694          WO-A1-2015/029840**
**JP-A- H07 180 747          JP-A- 2000 320 626**
**JP-A- 2001 065 648          JP-A- 2006 153 249**
**US-B1- 8 312 959**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft Verfahren zur Dimensionierung eines Zahnriementriebs mit einem Zahnriemen und mindestens zwei Zahnscheiben, vorzugsweise schrägverzahnt, wobei der Zahnriemen mindestens eine mit einem Zahnprofil versehene Antriebsseite und die Zahnscheiben ein zum Zahnprofil des Riemens komplementäres Zahnprofil aufweisen, wobei der Zahnriemen die Zahnscheiben über einen Teilbereich ihres Umfangs umschlingt und die Zähne des Zahnriemens in die Zahnzwischenräume der Zahnscheiben kämmend eingreifen.

Eine der Herausforderungen bei der Auslegung bzw. Dimensionierung solcher Zahnriementriebe besteht darin, möglichst leise laufende Zahnriementriebe bereitzustellen und Geräuschbildung möglichst zu reduzieren. Laufgeräusche ergeben sich insbesondere durch die konstruktiven und geometrischen Verhältnisse beim Eingriff der Zähne in die Zahnriemenscheibe und die dadurch entstehenden Vibrationen und Schwingungen im Trum. Auch wenn bereits eine Geräuschreduzierung durch den Übergang von geradverzahnten Zahnriementrieben auf schrägverzahnte Zahnriementriebe möglich ist, so sind auch die dort noch vorhandenen Geräuschemissionen erheblich und nicht gewünscht.

Die EP 1 614 933 B1 offenbart einen schrägverzahnten Riementrieb, bei dem Geräusch und Vibration dadurch reduziert werden sollen, dass das Spiel (Backlash "D"), d.h. die Lückenluft zwischen dem schrägverzahnten Riemen und Zahnscheibe in einem bestimmten Verhältnis zur Zahnteilung bei einem bestimmten Zahnsteigungswinkel und vorgegebener Breite des Zahnriemens eingestellt wird. Ähnliche Maßnahmen schlägt die EP 2 803 879 A1 vor, insbesondere zur Geräuschreduzierung bei Zahnriementrieben in elektrischen Lenkkraftverstärkungen. Auch hier wird das Zahnspiel in Abhängigkeit von Zahnbreite und Zahnhöhe eingestellt US 8 312 959 B1 offenbart auch einen Zahnriementrieb.

Die Profilauslegung von Zahnscheiben als Gegenstück zu Zahnriemen und deren Profil in schrägverzahnten Zahnriementrieben sieht also stets ein gewisses Spiel, d.h. eine gewisse "Lückenluft" vor, allein schon deshalb, um eine gewisse Verschieblichkeit des Riemens gegen die Zahnscheibe in Umfangsrichtung zu gewährleisten, damit Fertigungstoleranzen des Riemens sowie sich ändernde Zugkräfte und daraus resultierende unterschiedliche Teilungslängen im Umschlingungsbogen auszugleichen. Dabei ist es das übergeordnete Ziel, das Spiel so auszubilden, dass ein störungsfreies Einlaufen des Zahnriemens in beide Zahnscheiben erreicht wird, um das Entstehen von Luft- und Körperschall zu minimieren.

Die WO 2015029840 A1 offenbart einen Zahnriementrieb als Fahrradantrieb, bei dem zwischen den Zahnlücken der Zahnscheibe und den Zähnen des Zahnriemens im Betriebszustand ein maximaler Abstand und eine maximale Zahnhöhe bzw. Lückentiefe festgelegt sind, hier jedoch mit dem Ziel, auch in verschmutzten Umgebungen ein Abspringen des Zahnriemens von den Scheiben zu vermeiden.

Bei einem Zusammenspiel von größeren und kleineren Zahnscheiben, insbesondere also in Zahnriementrieben für größere Übersetzungsverhältnisse, sind jedoch die im Stand der Technik bekannten Maßnahmen zur Reduzierung von Luft- oder Körperschall bei Zahnriementrieben nicht mehr ausreichend. Insbesondere bei Zahnriementrieben, die hohe Übersetzungen / Untersetzungen aufweisen und etwa die Drehzahl von Antrieb zu Abtrieb beträchtlich herabsetzen, greifen die genannten Maßnahmen allein schon deswegen nicht, weil die Eingriffsverhältnisse beim Einlaufen in eine kleine Zahnscheibe / Ritzel sich wesentlich von denen beim Einlaufen in eine große Zahnscheibe unterscheiden.

Für die Erfindung bestand also die Aufgabe, ein Verfahren zur Dimensionierung eines Riementriebs bereitzustellen, der bei Zahnscheiben unterschiedlicher Durchmesser/Zähnezahl und auch bei größerem Übersetzungen möglichst geräuscharm und im Eingriff stoßfrei läuft und auch bei hohen Drehzahlen wenig Vibrationen und Schwingungen im Trum erzeugt.

Gelöst wird diese Aufgabe durch die Merkmale der nebengeordneten Ansprüche 1 und 2. Weitere vorteilhafte Ausbildungen sind in den Unteransprüchen offenbart.

Dabei ist gemäß Anspruch 1 die auf die Nennteilung P bezogene und sich aus der Differenz der Breite $e_S$ der Zahnzwischenräume der jeweiligen Zahnscheibe und der Breite $e_R$ der Zähne des Zahnriemens ergebende Lückenluft $E_S$ in bzw. auf Mitte Zahnhöhe abhängig von der Zähnezahl $z_R$ des Zahnriemens und der Zähnezahl $z$ der Zahnscheibe so ausgebildet, dass gilt

$$E_S = e_S - e_R = \left[ C_S + \frac{0{,}004 \cdot z}{z_R - z} \right] \cdot P$$

wobei $C_S$ als eine Konstante für die Standard-Lückenluft bei Zahnriementrieben in einer Bandbreite von $0{,}06 \leq C_S \leq 0{,}08$ vorgegeben ist. Diese Konstante für die Standard-Lückenluft ist im Wesentlichen immer dann anwendbar, wenn die Zahnscheiben entweder relativ große und annähernd gleiche Durchmesser besitzen oder nur geringfügig in Durchmesser und Zähnezahl differieren.

Die Nennteilung P von Zahnriemen und Zahnscheibe ist dabei die Teilung auf der Höhe der Cord-Wirklinie, d. h. auf dem Radius, der durch die Mitte der Corde (Cordmitte) des die Zahnscheibe umschlingenden Zahnriemens festgelegt wird. Die Nennteilungslinie bzw. der Nennteilungsbogen liegt also radial außerhalb der Zähne der Zahnscheibe.

Die erfindungsgemäße Einstellung der Lückenluft reduziert Körperschall und Trumschwingungen, indem sowohl das Verhältnis der Zähnezahlen von Riemen und Riemenscheibe als auch die unterschiedlichen Krümmungen eines Riemens ausgehend von dessen Herstellung dann auch im Betrieb mit einer Riemenscheibe berücksichtigt werden. Die Lückenluft an jeder Zahnscheibe wird unter Nutzung und basierend auf allen im Trieb beteiligten Zähnezahlen bestmöglich ausgelegt. Das offenbarte Auslegungsprinzip spiegelt die eigentlichen technischen Wirkmechanismen wider, anstatt empirische Pauschalvorgaben anzusetzen.

Nicht genügend berücksichtigt wurden im Stand der Technik nämlich bisher die Übersetzungsverhältnisse aus der Riemenzähnezahl und den Zähnezahlen von kleinen und großen Zahnscheiben, wie sie z. B. in schrägverzahnten Zweischeibentrieben für Lenkungen generell eingesetzt werden. Solche Riementriebe können hohe Übersetzungen aufweisen und setzten die Drehzahl von Antrieb zu Abtrieb beträchtlich herab, oft etwa auf ein Drittel.

Immer dann, wenn kleine und größere Zahnscheiben im Zusammenspiel betrachtet werden, die Zahnscheiben also deutlich unterschiedliche Durchmesser / unterschiedliche Zähnezahlen besitzen, d.h. bei höheren Übersetzungen in einem Zahnriementrieb, wird die Aufgabe durch die in Anspruch 2 enthaltene erfindungsgemäße Ausbildung gelöst.

Dabei ist an der kleineren Zahnscheibe die auf die Nennteilung P bezogene und sich aus der Differenz der Breite $e_{Smk}$ der Zahnzwischenräume der jeweiligen kleineren Zahnscheibe und der Breite $e_R$ der Zähne des Zahnriemens ergebende Lückenluft $E_{S(mk)}$ auf Mitte Zahnhöhe abhängig von der Zähnezahl $z_R$ des Zahnriemens und den Zähnezahlen $z_k$ der kleineren Zahnscheibe und $z_g$ der größeren Zahnscheibe so ausgebildet, dass gilt:

$$E_{S(mk)} = e_{Smk} - e_R = \left[ C_S + \frac{0,004 \cdot z}{z_R - z_k} + \left( \frac{z_g}{z_k} - 1 \right) \cdot \frac{C_{mk} \cdot 2\pi \cdot u}{P \cdot z_g - 2\pi u} \right] \cdot P$$

wobei $C_S$ in einer Bandbreite von $0,06 \leq C_S \leq 0,08$ und $C_{mk}$ als eine weitere modifizierte Konstante für die Lückenluft bei Zahnriementrieben in einer Bandbreite von $1,00 \leq C_{mk} \leq 2,00$ vorgegeben sind.

Die einzelnen Parameter lassen sich am Besten in der Zusammenschau mit den unten näher beschriebenen Figuren erkennen und erklären.

Es bedeuten in den Formeln und Zeichnungen:

$C_{mk}$  Konstante der modifizierten Lückenluft der kleinen Scheibe
$C_S$  Konstante der Standard-Lückenluft
$E_{Smk}$  modifizierte Lückenluft der kleinen Scheibe
$E_S$  Standard-Lückenluft
$e_{Smk}$  Lückenbreite der modifizierten kleinen Zahnscheibe
$e_S$  Lückenbreite der Zahnscheibe
$e_R$  Zahnbreite des Riemens
$P$  Nennteilung
$u$  Wirklinienabstand
$z$  Zähnezahl einer Zahnscheibe
$z_g$  Zähnezahl der großen Zahnscheibe
$z_k$  Zähnezahl der kleinen Zahnscheibe
$z_R$  Zähnezahl des Zahnriemens

Durch die erfindungsgemäße Ausbildung der Lückenluft bzw. des Spiels gemäß Anspruch 1 ist im Unterschied zum bisherigen Stand der Technik dem Übersetzungsverhältnis Rechnung getragen, wobei ein optimal geräuscharmer Betrieb gewährleistet wird, wenn sich ein einlaufender Zahnriemen an jeder Zahnscheibe stoßfrei in die korrespondierende Zahnlücke setzen kann. Stoßfreies Einlaufen bedeutet auch genauso, dass die Lücke einer Zahnscheibe am Kopfkreis/Eingriffskreis noch groß genug ist, um die als nächstes einlaufende Eingriffsteilung (im Unterschied zur Nennteilung) ohne Anecken aufzunehmen, selbst wenn sich im schon besetzten Umschlingungsbogen mehrfach die Abweichungen von Riemeneingriffsteilung zu Scheibeneingriffsteilung aufsummiert haben und die Lückenluft teilweise aufgezehrt ist.

Weiterhin unterscheiden sich die Verhältnisse an jedem Scheibeneinlauf grundsätzlich - sowohl hinsichtlich der Teilungslänge aus Längssteifigkeit und lokal herrschender Trumkraft als auch hinsichtlich des Zahnscheibendurchmessers. Die Zahnriemen-Nennteilung wird bei der Zahnriemenherstellung auf der entsprechenden Form festgelegt, aber die Eingriffsteilung - im Wirklinienabstand unterhalb der Cordmitte gelegen, nimmt mit kleiner werdender Zahnscheibe ab. Daraus folgt, dass bei kleinen Zahnscheiben eine vergrößerte Lückenluft eingestellt wird. Die "Cordmitte" ist dabei die Mitte bzw. die mittlere Ebene der Verstärkungselemente, die innerhalb des Zahnriemenkörpers eingebettet bzw. im Riemen einvulkanisiert sind und als Längszugträger die wesentlichen Zugkräfte des Riemens aufnehmen. Die Cordmitte bestimmt somit die Wirkrichtung der Zugkraft beim Eingriff des Zahnriemens in die Zahnriemenscheibe.

Eine vorteilhafte Weiterbildung des erfindungsgemäßen Verfahrens besteht darin, dass eine der Zahnscheiben oder die kleinere Zahnscheibe einen Teilkreisdurchmesser aufweist von $d \leq 45\ mm$. In der Praxis hat sich gezeigt, dass bei diesen Durchmessern der Geräuschminderungseffekt besonders stark ausgebildet ist. Gleiches gilt für eine weitere vorteilhafte Ausbildung, die darin besteht, dass eine der Zahnscheiben oder die kleinere Zahnscheibe Zähnezahlen zwischen 20 und 60 aufweist.

Wie bereits oben angedeutet lässt sich ein solcherart dimensionierter Zahnriementrieb besonders gut einsetzen für elektrische Lenkverstäkergetriebe in Kraftfahrzeugen, insbesondere ausgebildet mit einer Schrägverzahnung.

Anhand eines Ausführungsbeispiels soll die Erfindung näher erläutert werden. Es zeigen

Fig. 1     einen hoch untersetzten schrägverzahnten Zahnriementrieb in Form einer Prinzipskizze

Fig. 2     die in erfindungsgemäßer Ausbildung nach Anspruch 1 vorhandenen Eingriffsverhältnisse zwischen Zahnriemen und Zahnscheibe

Fig. 3     die in erfindungsgemäßer Ausbildung nach Anspruch 2 vorhandenen Eingriffsverhältnisse zwischen Zahnriemen und kleiner Zahnscheibe

Fig. 4     Wertediagramm für das erfindungsgemäß ausgebildete Zahnspiel/die Lückenluft, aufgetragen über der Zähnezahl

Fig. 5     Diagramm zur Darstellung der quantitativ erreichbaren Geräuschreduzierung bei erfindungsgemäßer Ausbildung eines Riementriebs

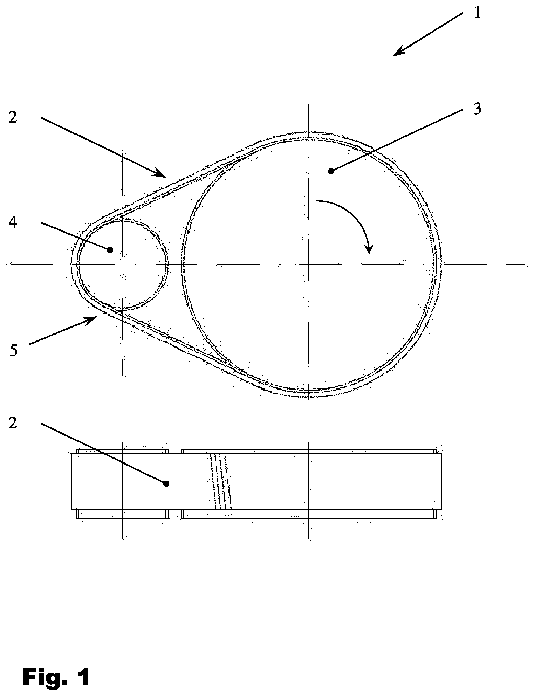

Fig. 1 zeigt einen hoch untersetzten schrägverzahnten Zahnriementrieb 1 mit einem Zahnriemen 2, einer großen Zahnscheibe 3 als Abtriebsscheibe und einer kleinen Zahnscheibe 4 als Antriebsscheibe. Im Einlaufbereich 5 läuft der Zahnriemen 2 mit seiner mit einem Zahnprofil versehene Antriebsseite auf die kleine Zahnscheibe 4 auf. Die kleine Zahnscheibe 4 weist ein zum Zahnprofil des Riemens komplementäres Zahnprofil auf, wobei der Zahnriemen die Zahnscheiben über einen Teilbereich ihres Umfangs umschlingt und die Zähne des Zahnriemens in die Zahnzwischenräume der Zahnscheiben kämmend eingreifen. Dasselbe gilt entsprechend für die große Zahnscheibe 3.

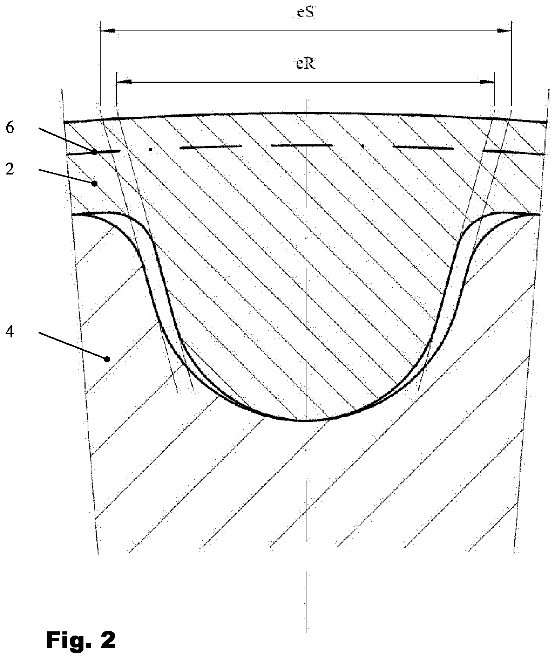

Fig. 2 zeigt die bei erfindungsgemäßer Dimensionierung nach Anspruch 1 vorhandenen Eingriffsverhältnisse zwischen Zahnriemen 2 und Zahnscheibe 4 in einer vergrößerten Darstellung. Dargestellt sind hier die Parameter $e_S$, d.h. die Lückenbreite der Zahnscheibe und $e_R$, d.h. die Zahnbreite des Riemens, sowie die Cordmitte 6, d.h. die die mittlere Ebene der im Zahnriemen einvulkanisierten Verstärkungselemente, auch als Cord-Wirklinie bezeichnet.

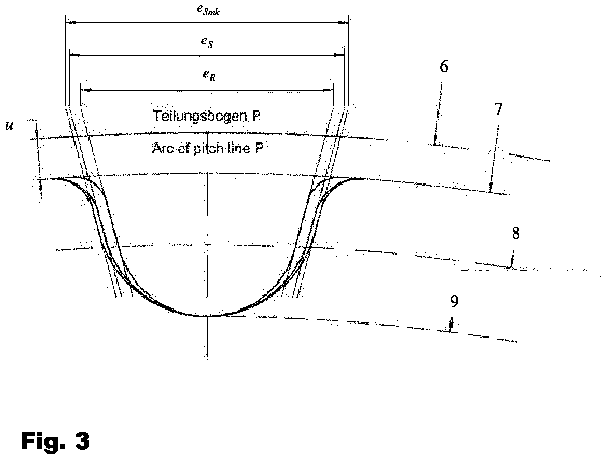

Diese Cordmitte oder Cord-Wirklinie 6 findet sich auch in der Fig. 3 wieder, welche die vorliegenden Eingriffsverhältnisse in einer erfindungsgemäßer Ausbildung nach Anspruch 2 zeigt. Sichtbar ist hier auch die Lückenbreite der modifizierten kleinen Zahnscheibe $e_{Smk}$, die hier zur Verdeutlichung der erfindungsgemäßen Ausbildung für Zahntriebe mit höherer Übersetzung im Vergleich zu der Lückenbreite der Zahnscheibe $e_S$ aus der Fig.2 dargestellt ist. Man sieht in dieser Darstellung deutlich, dass in diesem Fall die Lückenluft $E_{S(mk)} = e_{smk} - e_R$ für das kleinere Zahnrad in der Ausbildung gemäß Anspruch 2 (kleineres Zahnrad, höhere Übersetzung, unterschiedliche Zähnezahlen und Durchmesser) größer ist als die Lückenluft $E_S = e_S - e_R$ in der Ausbildung nach Anspruch 1, der im Wesentlichen auf die Auslegung größerer Zahnräder gerichtet ist.

Die jeweilige Lückenluft, auch Zahnspiel oder international *"Backlash"* genannt, ist festgelegt durch den Radius 8 der mittleren Zahnhöhe und dabei bezogen auf die Nennteilung P von Zahnscheibe und Zahnriemen.

In der Figur 3 ist auch der Wirklinienabstand $u$ dargestellt, der sich als Parameter in der zum Gegenstand des Anspruchs 2 gehörigen Formel wiederfindet. Der Wirklinienabstand $u$ beschreibt die Differenz zwischen dem Kopfkreisradius 7 der - hier kleineren - Zahnscheibe 4 und dem Radius der Cordmitte 6 im Umschlingungsbogen.

Insgesamt wird die Lückenluft jeder Zahnscheibe für einen möglichst geräuscharmen Betrieb also im Grunde an zwei teilweise gegenläufigen Effekten ausgerichtet, wodurch auch der Herstellungszustand des Zahnriemens berücksichtigt wird. Dies geschieht dadurch, dass eine Art "Standardvorschrift" sowohl die Zähnezahl des Riemens und dessen aus dem Herstellungsprozess auf einer Trommel sich ergebende Form und als auch die Zähnezahl der jeweiligen Scheibe in Betracht zieht, wie im Anspruch 1 offenbart. Diese erfindungsgemäße Ausbildung ist, wie oben bereits dargestellt, dann besonders geeignet zur Auslegung geräuscharmer Riementriebe, wenn die Zahnscheiben entweder relativ große und annähernd gleiche Durchmesser besitzen oder nur geringfügig in Durchmesser und Zähnezahl differieren. Für Geräusche entscheidend ist der störungsfreie Eingriff am Kopfkreis der Zahnscheibe, so dass eben die Eingriffsteilung am Kopfkreis wesentlich ist.

Unter der Prämisse, dass Fertigungsabweichungen bei der Zahnriemenherstellung sich in der Teilung des Zahnriemens aufsummieren, ergäbe sich der Effekt, dass die Lückenluft umso kleiner sein kann, je weniger Zähne ein Rad hat. Dem steht als weiterer Effekt gegenüber, dass die Krümmung des Riemens bei der Umschlingung des Scheibenrades die eigentlich entscheidende Eingriffsteilung am Kopfkreis verändert, so dass danach die Lückenluft umso größer sein sollte, je weniger Zähne das Rad hat.

Dementsprechend ist erfindungsgemäß die Dimensionierung nach Anspruch 2 vorgesehen, wodurch für die kleinere der beiden Scheiben eine zusätzliche Modifikation vorhanden ist, die den Krümmungsunterschied zwischen kleiner und großer Zahnscheibe berücksichtigt. Bei der Herstellung des Zahnriemens ist also bereits die durch die Formtrommel einvulkanisierte/eingefrorene und damit vorgegebene Krümmung vorhanden, während im Betrieb und bei der Umschlingung auf den Zahnscheiben zwei weitere davon verschiedene Krümmungen entstehen.

Der Einfluss dieser drei unterschiedlichen Krümmungen wird in der Ausführungsform nach Anspruch 2 repräsentiert durch die Zähnezahlen von kleiner und großer Zahnscheibe sowie durch die Zähnezahl des Riemens für den Einfluss aus dessen Herstellung durch den aus Anspruch 1 mitgeführten Term, der für die Standard-Lückenluft und für beide Scheiben zur Anwendung kommt. Überraschenderweise gelingt mit der in den Ansprüchen 1 und 2 offenbarten Ausbildung der Erfindung eine besonders geräuscharme Auslegung eines Zahnriementriebs auch mit standardmäßig hergestellten Zahnriemen.

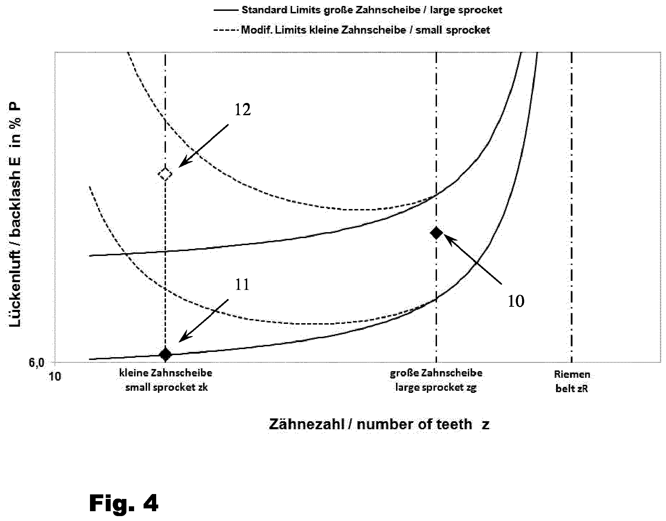

Fig. 4 zeigt die oben genannten gegenläufigen Effekte in einem entsprechenden Wertediagramm. Dabei ist das Zahnspiel/die Lückenluft über der Zähnezahl aufgetragen. Die durchgezogenen Linien repräsentieren den Wertebereich, der sich innerhalb der durch die Konstante $C_S$ vorgegebenen Grenzen bei einer Ausbildung und Auslegung der Lückenluft gemäß Anspruch 1 ergibt. Die strichpunktierten Linien repräsentieren den Wertebereich der sich mit den Konstanten $C_S$ und $C_{mk}$ bei einer entsprechenden Ausbildung gemäß Anspruch 2 ergibt.

Mit Fig. 4 lässt sich auch sehr gut der Unterschied in den einzelnen Auslegungen nach Anspruch 1 oder Anspruch 2 verdeutlichen. Der Auslegungspunkt bzw. das Wertepaar 10 zeigt die Ausbildung der Lückenluft bei einer Zahnscheibe größeren Durchmessers/höherer Zähnezahl nach Anspruch 1, wobei hier die Geräuschbildung beim Eingriff erfolgreich reduziert wurde.

Würde man nun jedoch eine Zahnscheibe kleineren Durchmessers/kleinerer Zähnezahl entsprechend der Ausbildung gemäß Anspruch 1 auslegen bzw. dimensionieren, so käme man auf den Auslegungspunkt/das Wertepaar 11 (weniger Lückenluft). Bei dieser Konstellation konnte jedoch die Geräuschbildung beim Eingriff in das kleinere Rad nicht reduziert werden. Dies ist erst möglich, wenn eine Dimensionierung nach einem Verfahren erfolgt, wie es in Anspruch 2 offenbart ist. Mit einer solchen Auslegung erreicht man eine Lückenluft gemäß des Wertepaars/des Auslegungspunktes 12 (größere Lückenluft). Damit wird dann eine erhebliche Geräuschreduzierung erreicht.

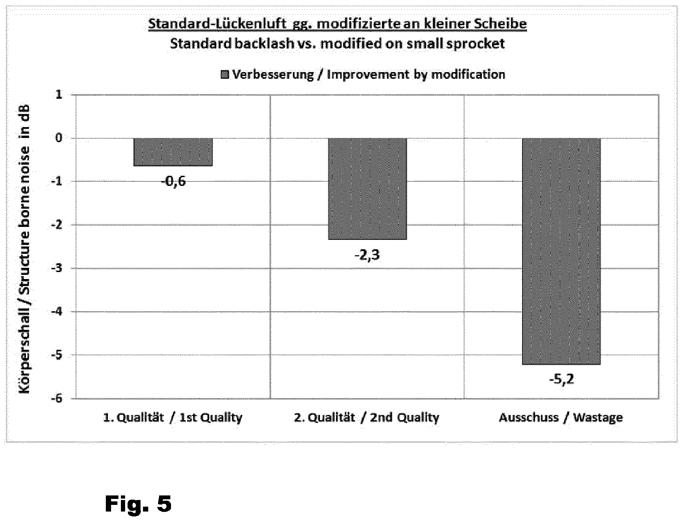

Fig. 5 zeigt auch rein quantitativ die erreichbare Geräuschreduzierung bei erfindungsgemäßer Ausbildung eines Riementriebs nach Fig. 1. Für die Untersuchung wurden unterschiedliche Zahnriemen bereitgestellt, die bereits einer vorlaufenden Geräuschprüfung unter normalen Verhältnissen unterworfen wurden, also mit üblichen Zahnscheiben aus dem Stand der Technik getestet wurden. Diese vorlaufenden Tests führten zur Eingruppierung der getesteten Zahnriemen in unterschiedliche Qualitätsklassen in Bezug auf Geräuschemission, nämlich in eine Klasse "1.Qualität", in eine Klasse "2.Qualität" und in eine Klasse "Ausschuss".

Danach wurden diese Riemen erneut auf Geräuschemission getestet, diesmal aber in einem Riementrieb, bei dem die jeweils kleineren Zahnscheiben erfindungsgemäß ausgebildet waren, deren Lückenluft nämlich gemäß Anspruch 2 modifiziert war.

Die Grafik in Figur 5 zeigt nun die dadurch erreichte Verbesserung in der Geräuschemission. Es ergab sich eine Reduktion des Körperschalls um bis zu 5,2 dB.

Eine solche gravierende Geräuschreduktion entspricht dem Abstand im Geräuschverhalten zwischen "1.Qualität" und "Ausschuss" unter normalen Kriterien. Demzufolge können Riemen, die bisher im Hinblick auf ihr Geräuschverhaltens als Ausschuss einzuordnen waren, mit der erfindungsgemäßen Ausbildung eines Zahnriementriebs / von Zahnscheiben wieder soweit hochgestuft werden, dass sie in Bezug auf Geräuschimmission noch als Qualitätsware genutzt werden können. Dies zeigt deutlich, dass die erfindungsgemäße Ausbildung eines Zahnriementriebs, bzw. seiner Zahnscheiben und deren Lückenluft eine wesentliche Verbesserung in der Geräuschemission von Zahnriementrieben auch bei standardisierten Zahnriemen bewirkt.

**Bezugszeichenliste**

1 Zahnriementrieb
2 Zahnriemen
3 Zahnscheibe (Abtriebsscheibe)
4 Zahnscheibe (Antriebsscheibe)
5 Einlaufbereich
6 Radius der Cordmitte

7    Kopfkreisradius des Ritzels (kleine Zahnscheibe)
8    Radius mittlere Zahnhöhe
9    Fußkreisradius des Ritzels (kleine Zahnscheibe)
10   Wertepaar/Auslegungspunkt für Lückenluft
11   Wertepaar/Auslegungspunkt für Lückenluft
12   Wertepaar/Auslegungspunkt für Lückenluft

**Patentansprüche**

1. Verfahren zur Dimensionierung eines Zahnriementriebs (1) mit einem Zahnriemen (2) und mindestens zwei Zahnscheiben (3, 4), vorzugsweise schrägverzahnt, wobei der Zahnriemen (2) mindestens eine mit einem Zahnprofil versehene Antriebsseite und die Zahnscheiben (3, 4) ein zum Zahnprofil des Riemens komplementäres Zahnprofil aufweisen, wobei der Zahnriemen die Zahnscheiben über einen Teilbereich ihres Umfangs umschlingt und die Zähne des Zahnriemens (2) in die Zahnzwischenräume der Zahnscheiben (3, 4) kämmend eingreifen, **dadurch gekennzeichnet, dass** die auf die Nennteilung P bezogene und sich aus der Differenz der Breite es der Zahnzwischenräume der jeweiligen Zahnscheibe und der Breite $e_R$ der Zähne des Zahnriemens ergebende Lückenluft Es auf Mitte Zahnhöhe abhängig von der Zähnezahl $z_R$ des Zahnriemens und der Zähnezahl z der Zahnscheibe so ausgebildet ist, dass gilt

$$E_S = e_S - e_R = \left[C_S + \frac{0{,}004 \cdot z}{z_R - z}\right] \cdot P$$

wobei $C_S$ als eine Konstante für die Standard-Lückenluft bei Zahnriementrieben in einer Bandbreite von

$$0{,}06 \leq C_S \leq 0{,}08$$

vorgegeben ist.

2. Verfahren zur Dimensionierung eines Zahnriementriebs nach dem Oberbegriff des Anspruchs 1, insbesondere mit mindestens zwei Zahnscheiben unterschiedlicher Durchmesser, **dadurch gekennzeichnet, dass** an der kleineren Zahnscheibe die auf die Nennteilung P bezogene und sich aus der Differenz der Breite $e_{Smk}$ der Zahnzwischenräume der jeweiligen kleineren Zahnscheibe und der Breite $e_R$ der Zähne des Zahnriemens ergebende Lückenluft $E_{S(mk)}$ auf Mitte Zahnhöhe abhängig von der Zähnezahl $z_R$ des Zahnriemens und den Zähnezahlen $z_k$ der kleineren Zahnscheibe und $z_g$ der größeren Zahnscheibe so ausgebildet ist, dass gilt:

$$E_{S(mk)} = e_{Smk} - e_R = \left[C_S + \frac{0{,}004 \cdot z}{z_R - z_k} + \left(\frac{z_g}{z_k} - 1\right) \cdot \frac{C_{mk} \cdot 2\pi \cdot u}{P \cdot z_g - 2\pi u}\right] \cdot P$$

wobei $C_S$ in einer Bandbreite von

$$0{,}06 \leq C_S \leq 0{,}08$$

und $C_{mk}$ als eine modifizierte Konstante für die Lückenluft bei Zahnriementrieben in einer Bandbreite von

$$1{,}00 \leq C_{mk} \leq 2{,}00$$

vorgegeben sind.

3. Verfahren zur Dimensionierung eines Zahnriementriebs nach Anspruch 1 oder 2, bei dem eine der Zahnscheiben oder die kleinere Zahnscheibe einen Teilkreisdurchmesser aufweist von $d \leq 45$ *mm*.

4. Verfahren zur Dimensionierung eines Zahnriementriebs nach einem der Ansprüche 1 bis 3, bei dem eine der Zahnscheiben oder die kleinere Zahnscheibe Zähnezahlen zwischen 20 und 60 aufweist.

**Claims**

1. Method for dimensioning a toothed belt drive (1) having one toothed belt (2) and at least two, preferably helically geared, toothed pulleys (3, 4), wherein the toothed belt (2) has at least one drive side, provided with a toothed profile, and the toothed pulleys (3, 4) have a toothed profile that is complementary to that of the belt, wherein the toothed belt wraps the toothed pulleys over a part-region of the circumference of the latter and the teeth of the toothed belt (2) mesh in the tooth gaps of the toothed pulleys (3, 4), **characterized in that** the air gap $E_S$ that relates to the nominal pitch P and results from the difference between the width $e_S$ of the tooth gaps of the respective toothed pulley and the width $e_R$ of the teeth of the toothed belt at the mean height of the teeth, depending on the tooth count $z_R$ of the toothed belt and on the tooth count z of the toothed pulley, is configured such that

$$E_S = e_S - e_R = \left[ C_S + \frac{0.004 \cdot z}{z_R - z} \right] \cdot P$$

wherein $C_S$ is predefined as a constant for the standard backlash in the case of toothed belt drives in a range of

$$0.06 \leq C_S \leq 0.08$$

2. Method for dimensioning a toothed belt drive according to the preamble of Claim 1, in particular having at least two toothed pulleys of dissimilar diameters, **characterized in that** at the smaller toothed pulley the air gap $E_{S(mk)}$ that relates to the nominal pitch P and results from the difference between the width $e_{Smk}$ of the tooth gaps of the respective smaller toothed pulley and the width $e_R$ of the teeth of the toothed belt at the mean height of the teeth, depending on the tooth count $z_R$ of the toothed belt and on the tooth counts $z_k$ of the smaller toothed pulley and on $z_g$ of the larger toothed pulley, is configured such that:

$$E_{S(mk)} = e_{Smk} - e_R = \left[ C_S + \frac{0.004 \cdot z}{z_R - z_k} + \left( \frac{z_g}{z_k} - 1 \right) \cdot \frac{C_{mk} \cdot 2\pi \cdot u}{P \cdot z_g - 2\pi u} \right] \cdot P$$

wherein $C_S$ is predefined in a range of

$$0.06 \leq C_S \leq 0.08$$

and $C_{mk}$ is predefined as a modified constant for the air gap in the case of toothed belt drives in a range of

$$1.00 \leq C_{mk} \leq 2.00$$

3. Method for dimensioning a toothed belt drive according to Claim 1 or 2, in which one of the toothed pulleys or the smaller toothed pulley has a pitch circle diameter of $d \leq 45$mm.

4. Method for dimensioning a toothed belt drive according to one of Claims 1 to 3, in which one of the toothed pulleys or the smaller toothed pulley has tooth counts between 20 and 60.

**Revendications**

1. Procédé de dimensionnement d'un entraînement par courroie crantée (1) pourvu d'une courroie crantée (2) et d'au moins deux poulies dentées (3, 4), de préférence à denture hélicoïdale, la courroie crantée (2) comportant au moins un côté entraînement pourvu d'un profil denté et les poulies dentées (3, 4) comportant un profil de dent complémentaire du profil de dent de la courroie, la courroie crantée s'enroulant autour des poulies dentées sur une partie de leur circonférence et les dents de la courroie crantée (2) s'engrenant dans les espaces de dent intermédiaires des poulies dentées (3, 4), **caractérisé en ce que** le jeu $E_S$ au milieu de la hauteur de dent, lequel est lié au pas nominal P et résulte de la différence entre la largeur $e_S$ des espaces de dent intermédiaires de la poulie dentée respective et de la largeur $e_R$ des dents de la courroie crantée, est ménagé en fonction du nombre de dents $z_R$ de la courroie crantée et du nombre de dents z de la poulie dentée de telle sorte que

$$E_S = e_S - e_R = \left[ C_S + \frac{0{,}004 \cdot z}{z_R - z} \right] \cdot P$$

$C_S$ étant une constante du jeu standard dans les transmissions par courroie crantée dans une plage de

$$0,06 \le C_S \le 0,08.$$

2. Procédé de dimensionnement d'un entraînement par courroie crantée selon le préambule de la revendication 1, comprenant en particulier au moins deux poulies dentées de diamètres différents, **caractérisé en ce que**, sur la plus petite poulie dentée, le jeu $E_{S(mk)}$ au milieu de la hauteur de dent, lequel est lié au pas nominal P et résulte de la différence entre la largeur $e_{Smk}$ des espaces de dent intermédiaires de la plus petite poulie dentée respective et de la largeur $e_R$ des dents de la courroie crantée, est ménagé en fonction du nombre de dents $z_R$ de la courroie crantée et des nombres de dents $z_k$ de la plus petite poulie dentée et du $z_g$ de la plus grande poulie dentée de telle sorte que

$$E_{S(mk)} = e_{Smk} - e_R = \left[ C_S + \frac{0{,}004 \cdot z}{z_R - z_k} + \left( \frac{z_g}{z_k} - 1 \right) \cdot \frac{C_{mk} \cdot 2\pi \cdot u}{P \cdot z_g - 2\pi u} \right] \cdot P$$

$C_S$ étant dans une plage de

$$0,06 \le C_S \le 0,08$$

et $C_{mk}$ étant une constante modifiée pour le jeu dans les entraînements par courroie crantée dans une plage de

$$1,00 \le C_{mk} \le 2,00.$$

3. Procédé de dimensionnement d'un entraînement par courroie crantée selon la revendication 1 ou 2, dans lequel l'une des poulies dentées ou la plus petite poulie dentée a un diamètre de cercle primitif d ≤ 45 mm.

4. Procédé de dimensionnement d'un entraînement par courroie crantée selon l'une des revendications 1 à 3, dans lequel l'une des poulies dentées ou la plus petite poulie dentée a un nombre de dents compris entre 20 et 60.

**Fig. 1**

eS

eR

6

2

4

**Fig. 2**

$e_{Smk}$

$e_S$

$e_R$

6

7

Teilungsbogen P

$u$

Arc of pitch line P

8

9

**Fig. 3**

— Standard Limits große Zahnscheibe / large sprocket
---- Modif. Limits kleine Zahnscheibe / small sprocket

Lückenluft / backlash E in % P

Zähnezahl / number of teeth z

kleine Zahnscheibe
small sprocket zk

große Zahnscheibe
large sprocket zg

Riemen
belt zR

**Fig. 4**

**Standard-Lückenluft gg. modifizierte an kleiner Scheibe**
**Standard backlash vs. modified on small sprocket**

▨ Verbesserung / Improvement by modification

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1614933 B1
- EP 2803879 A1
- US 8312959 B1
- WO 2015029840 A1